# EUROPÄISCHE PATENTSCHRIFT

(11) **EP 0 418 549 B1**
(45) Veröffentlichungstag und Bekanntmachung des Hinweises auf die Patenterteilung: **09.06.1993**
(21) Anmeldenummer: 90115534.1
(22) Anmeldetag: 14.08.1990
(51) Int. Cl.: B29C 67/16, C08L 101/00, B44F 9/04

(54) **Verfahren zur Herstellung von Profilen**
Method to produce shaped pieces
Procédé pour la fabrication de profilés

(30) Priorität: 18.09.1989 DE 3931074
(43) Veröffentlichungstag der Anmeldung: 27.03.1991
(73) Patentinhaber: REHAU AG + Co, 95111 Rehau (DE)
(72) Erfinder:

(56) Entgegenhaltungen:
- FR-A- 2 031 665
- FR-A- 2 615 857
- GB-A- 855 748
- PATENT ABSTRACTS OF JAPAN, Band 7, Nr. 34 (C-150)[1179], 10. Februar 1983; & JP-A-57 187 326 (MATSUSHITA DENKI SANGYO K.K.) 18-11-1982

## Beschreibung

Die Erfindung betrifft ein Verfahren zur Herstellung von Profilen, Leisten, Bändern, Platten und dergleichen aus thermoplastischem Kunststoff, wobei dem Kunststoff vor der Formgebung die Kunststoffeigenschaften beeinflussende Füllstoffe beigemengt werden.

Aus der DE-OS 22 28 677 ist ein Kunststoff bekannt, dessen Masse vor der Formgebung verschiedene Füllstoffe beigegeben werden. Als Beispiele für diese Füllstoffe sind Calciumcarbonat, Asbest, Ton, Kaolin oder Talkum genannt. Zusätzlich zu diesen Füllstoffen kann in vorteilhafter Weise nach dem genannten Stand der Technik auch noch ein geringer Glasfaseranteil dem Gemenge beigemischt werden. Die Füllstoffe werden dabei mit einem hohen Füllstoffgehalt von 300 und mehr Gewichtsteilen auf 100 Gewichtsteile Kunststoff beigegeben. Die Glasfaseranteile bewegen sich demgegenüber zwischen 0,2 und 5 Gewichtsprozent, bezogen auf die Gesamtmasse. Die mit diesen Füll- und Zugabestoffen versehenen Kunststoffmassen zeigen ausgezeichnete Verarbeitungseigenschaften und sehr gute physikalische und mechanische Eigenschaften wie verminderte Sprödigkeit und verbesserte Abriebbeständigkeit.

Ein derart angereichertes Kunststoffmaterial - beispielsweise Polyvinylchlorid - läßt sich hervorragend zu Fußbodenbelägen verarbeiten. Andere Anwendungsgebiete sind aufgrund der hohen Füllstoffanteile jedoch nicht gegeben.

Aus der DE-PS 36 23 795 ist die Verwendung einer Fraktion gehärteter Partikel aus elastomerem Material als Beimischung zu ungehärtetem elastomeren Material vor dessen Aushärtung bekannt. Nach diesem Stand der Technik können Partikelgrößen von 0,1 bis 1 mm in einer Größenordnung von 5 bis 60 Teilen zu jeweils 100 Teilen des ungehärteten elastomeren Materials beigegeben werden. Mit dieser Mischung erzeugte Gegenstände aus elastomerem Material, wie beispielsweise Silikongummi, erhalten eine definiert unruhige Oberfläche.

Wesentlich bei der Erzeugung solcher Produkte ist die Tatsache, daß dem ungehärteten elastomeren Material als Ausgangspunkt ausschließlich gehärtete Partikel wiederum aus elastomerem gehärtetem Material beigemengt werden können. Hierbei kann es sich bei den gehärteten elastomeren Partikeln um solche aus Silikon- oder Gummielastomeren handeln. Thermoplaste oder andere Materialien wie Polyester und dergleichen, sind von dieser Behandlung ausgeschlossen.

Die DE-OS 22 55 033 beschreibt ein Verfahren zum Einbringen von Farbpigmenten in die Oberfläche von Kunststoffpartikeln. Dabei wurden die Farbpigmente, die einen wesentlich höheren Schmelzpunkt besitzen als die Kunststoffpartikel, in die angeschmolzene Oberfläche der Kunststoffpartikel eingelagert.

In einem zweiten Verfahrensschritt wird dann die Masse der Kunststoffpartikel völlig aufgeschmolzen, wobei die oberflächlich eingelagerten Farbpigmente zu einer vollkommen durchgefärbten Schmelze führen.

Hier setzt die Erfindung ein, die es sich zur Aufgabe gestellt hat, ein Verfahren zur Herstellung von Gegenständen aus thermoplastischen Kunststoffen anzugeben, die neben den zur Verarbeitung und zur späteren Verwendung erforderlichen mechanischen und chemischen Eigenschaften eine spezielle Gestaltung der Oberfläche aufweisen. Erfindungsgemäß wird dazu vorgeschlagen, daß als Füllstoffe die Oberflächenrauhigkeit beeinflussende Partikel eines im Schmelzestrom nicht schmelzbaren Kunststoffmaterials eingebracht werden, welche Partikel einen maximalen Anteil von 15 Gewichtsprozent und eine Partikelgröße von maximal 0,7 mm aufweisen.

Als Basiskunststoff für das erfindungsgemäße Verfahren kann Polyvinylchlorid (PVC), Acrylnitril-Butadien-Stryrol-Terpolymer (ABS) oder Polypropylen (PP), verwendet werden. Die Verwendung anderer Matrix-Materialien ist - sofern sie mit den beizufügenden Partikeln verarbeitbar sind - selbstverständlich nicht ausgeschlossen.

Die die Oberflächenrauhigkeit beeinflussenden Partikel können solche aus Polyterephthalat (Polyester) sein. Solche Partikel können beispielsweise aus einer Polyesterfolie in regelmäßigen oder unregelmäßigen Größen gewonnen werden. Die Polyesterfolie kann dabei ein- oder beidseitig mit einem Metall - z.B. Aluminium - in dünnster Schicht bedampft sein. Auf diese Weise lassen sich an den Oberflächen der hergestellten Endprodukte durch die von außen sichtbaren Partikel besondere Effekte erzielen. Diese Effekte können noch dadurch gesteigert werden, daß die Polyesterfolie vor der Partikel-Herstellung neben der Metallbedampfung mit einer Lackschicht, die ihrerseits beliebig gefärbt sein kann, belegt ist. Hierbei ist es selbstverständlich, daß diese Lackschicht so hitzebeständig sein muß, daß die Verarbeitungstemperaturen des thermoplastischen Materials keine Denaturierung der Lackschicht herbeiführen können.

Wird beispielsweise eine solche Polyesterfolie zur Herstellung der Partikel verwendet, dann können die Partikel beispielsweise in regelmäßiger Gestalt aus dieser Folie ausgeschnitten werden. Solche regelmäßigen Partikel kleinerer oder größerer Abmessungen können zu einem Partikelgemisch vermengt werden, wobei ein solches Gemisch der Produktoberfläche eine spezielle Gestaltung verleihen kann.

Neben dem regelmäßigen Schneiden der Partikel in beliebigen Abmessungen und Figurationen können die Partikel auch durch Vermahlen des Ausgangsproduktes erzeugt werden. Das Vermahlen des beispielsweise aus Polyesterfolie gestalteten Ausgangspunkts kann unter Kälteeinwirkung erfolgen. Hierbei ist das Mahlen in Kugel- oder Prallmühlen unter flüssigem Stickstoff bei beispielsweise -120° C anwendbar. Bei diesem bekannten Mahlverfahren sind die optimalen Partikelgrößen einstellbar, so daß neben einem vernachlässigbar geringen Staubanfall lediglich die gewünschte Partikelfraktion erzeugt wird.

Die optimale Partikelgröße liegt erfindungsgemäß zwischen 0,002 mm und 0,7 mm, vorzugsweise zwischen 0,01 mm und 0,2 mm. Diese Partikel werden in einem bevorzugten Mengenverhältnis von 0,1 bis 8 Gewichtsprozent jeweils 100 Teilen des Basiskunststoffes beigemengt.

Mit dem auf diese Weise angereicherten Basiskunststoff können Profile, Leisten, Bänder, Platten, aber auch Schläuche, Rohre und dergleichen hergestellt werden. Die Herstellung kann im Extrusionsverfahren, im Spritzgußverfahren oder i m Blasverfahren erfolgen.

Bei der Verarbeitung des erfindungsgemäß mit den Partikeln versehenen Basiskunststoffes ist die den Partikeln innewohnende Flexibilität als besonders wesentlich hervorzuheben. Die aus Polyestermaterial bestehenden Partikel zeigen ähnliche Verarbeitungseigenschaften wie der Basiskunststoff und haben keinerlei abrasive Eigenschaften, die einen nachteiligen Einfluß auf die Verarbeitungsmaschinen ausüben könnten.

Solche nachteiligen Eigenschaften wären festzustellen, wenn die Partikel beispielsweise als Metallfolien, z.B. Aluminium, aus Quarz oder dergleichen, bestehen würden. Die Beimengung derartiger Partikel würde zwar auch eine Auswirkung auf die Oberflächeneigenschaften der erzeugten Produkte haben, die sie jedoch nachteilig dadurch beeinflussen, daß scharfkantige Partikelflächen in die Oberfläche eingelagert wären, was bei vielen Anwendungsfällen nicht erwünscht ist. Neben den nachteiligen Eigenschaften solcher abrasiver Partikel, die die Förderbereiche der Verarbeitungsmaschinen negativ beeinflussen können, wären damit negative Oberflächeneigenschaften der Endprodukte verbunden, so daß die Verwendung solcher Partikel ausscheidet.

Demgegenüber haben die erfindungsgemäß vorgeschlagenen Partikel aus Polyester keine derartigen negativen Einflüsse. Die in den Randbereichen der Ausgangsmatrix während der Förderung in den Verarbeitungsmaschinen befindlichen Partikel bleiben vielmehr ohne Schwierigkeit an den Oberflächen der Fördermittel bis zu den formgebenden Werkzeugen und behalten ihre Gleiteigenschaft bis zum Verlassen dar Verarbeitungsmaschinen.

Da die erfindungsgemäß verwendeten Partikel mit dem Schmelzestrom des Thermoplasten während der Verarbeitung keine Verbindung eingehen, liegen diese Partikel im querschnitt des Schmelzestroms wie auch an dessen Grenzflächen als Fremdkörper eingebettet. Im querschnitt des Schmelzestroms und im querschnitt des erzeugten Fertigproduktes sind diese Fremdkörper voll von der Matrix des Basiskunststoffes umgeben, d.h. in diesen eingeschlossen. Aufgrund der erfindungsgemäß verwendeten geringen Partikelmenge ergeben diese eingeschlossenen Fremdkörper keine die Verwendung hindernde negative Beeinträchtigung der Endprodukte. Die im Grenzbereich angesiedelten Partikel treten im Endbereich der Fertigung in Anlage an die Werkzeuginnenflächen. Diese Partikel sind dabei mehr oder weniger in die Matrix eingebettet und erzeugen beim Austreten aus dem Werkzeugspalt bei der Extrusionsfertigung eine besondere Oberflächengestaltung der Endprodukte. Diese Oberfläche kann beispielsweise durch die oberflächennah eingelagerten Partikel einen Steincharakter aufweisen, wobei in erster Linie die Rauhigkeit einer Steinoberfläche imitiert werden kann. Diese Eigenschaft kann durch die Partikelgrößen und die beigegebenen Partikelmengen beeinflußt werden.

Durch besondere Farbgebung der Partikel an deren Oberflächen kann diese Oberflächeneigenschaft des Endproduktes noch verstärkt werden. So können die Partikel ein- oder beidseitig beispielsweise eine Lackbeschichtung aus farbigem Lack tragen, wobei Steinfarben wie schwarz, weiß, grau, braun, grün oder rot verwendet werden können. Diese farblich gestalteten Partikel können untereinander vermischt werden, wobei durch die Beigabe solcher Mischpartikel zur Ausgangsmatrix eine ganz spezielle farbliche Gestaltung der Oberfläche und des Querschnitts der Endprodukte erzielt werden kann.

Es ist eine wesentliche Eigenschaft der erfindungsgemäß hergestellten Endprodukte, daß diese nach ihrer Fertigung weiterhin mechanisch bearbeitet werden können.

Da die besondere Gestaltung der Oberfläche in ihrer Rauhigkeit und ggf. farbigen Auslegung nicht nur oberflächlich ist, sondern den gesamten Querschnitt des hergestellten Produkts erfaßt, kann eine spätere mechanische Bearbeitung ohne weiteres erfolgen.

Die durch eine solche Bearbeitung freigelegten Querschnittsbereiche weisen annähernd die gleichen Eigenschaften auf wie die bei der Fertigung des Produktes erzeugten Oberflächen. Das Fertigprodukt läßt sich also optimal einsetzen, da es nach der Fertigstellung weiterverarbeitet werden kann und dabei Qualitätseinbußen der Oberfläche und der außenliegenden bearbeiteten Querschnittsbereiche nicht eintreten.

Das erfindungsgemäße Verfahren kann neben der Extrusion auch im Spritzguß verwendet werden. Da bei diesem Verfahren die Endausformung der Produkte jedoch nicht unter Gleitbewegung an Werkzeugoberflächen, sondern im statischen Bereich erfolgt, werden die Partikel durch den Spritzdruck fest in die Oberfläche eingepresst, wodurch sich ein annähernd glatter Oberflächencharakter der Endprodukte ergibt. Im Spritzgußverfahren nach der Erfindung hergestellte Endprodukte haben das Aussehen einer glattgeschliffenen Steinoberfläche und können farblich genauso gestaltet sein wie extrudierte Endprodukte. Ähnliche Eigenschaften wie die spritzgegossenen Artikel weisen die im Blasverfahren hergestellten Endprodukte auf, da dort das extrudierte Halbzeug nach Schließen einer zweigeteilten Form durch das Anlegen von innerem Blasdruck an die Oberflächen der geschlossenen Formteilhälften angepresst werden, Auch solche Artikel weisen also nach Fertigstellung zumindest in ihren außenliegenden Konturen das Aussehen eines geschliffenen Steines auf.

Bei den extrudierten Produkten kann durch die erfindungsgemäße Beifügung der Partikel an der Oberfläche je nach Größe und Menge der beigefügten Partikel eine Rauhtiefe von maximal 50 µm erzielt werden. Die bevorzugte Rauhtiefe liegt hierbei zwischen 10 und 40 µm, wobei diese Rauhigkeit je nach Einsatzzweck des Endproduktes durch Anzahl und Oberflächengestaltung der beigefügten Partikel beeinflußt werden kann.

Wie bereits beschrieben, können die Partikel beispielsweise aus einer Polyesterfolie geschnitten werden, wobei durch deren Beimengung zur Ausgangsmatrix die Verarbeitungseigenschaften dieser Matrix nicht negativ beeinflußt werden.

Die Partikel können auch aus einem Duroplasten hergestellt sein. Sie können regelmäßige Gestalt aufweisen in Form von geschnittenen Partikeln oder unregelmäßig gestaltet sein, wobei diese unregelmäßige Gestalt durch Mahlen erzeugt wird. Vorzugsweise werden bei der Herstellung der Partikel zuvor erzeugte Folien als Ausgangsmaterialien verwendet. Diese Folien können in der Masse oder durch oberflächliche Beschichtung gefärbt sein. Die oberflächliche Färbung kann durch Lackieren oder Metallbedampfung erfolgen. Metallbedampfte Folien können zusätzlich mit einer Lackschicht versehen sein, wobei transparente, eingefärbte Lacke besondere optische Eigenschalften erzielen.

Die aus solchen Folien geschnittenen Partikel können regelmäßig geschnitten sein, z.B. quadratisch, hexagonal, rechteckig oder in Formen wie Sternchen und dergleichen. Durch Verwendung unterschiedlicher Größen solcher regelmäßig geschnittener Partikel können spezielle optische Eigenschaften der Endprodukte erzielt werden. Dies ist auch möglich durch die unregelmäßige Zerkleinerung der Ausgangsmaterialien (Folien), wobei die Fraktion verschiedener Partikelgrößen zu entsprechend unruhigen Effekten im Querschnitt und der Oberfläche der Endprodukte führt.

Die Einbringung der erfindungsgemäßen Partikel in die Matrix kann direkt in die verarbeitungsfertige Mischung oder als Farbgranulat mit erhöhter Konzentration erfolgen. Die Vermengung der Partikel in der Matrix kann vor der Fertigung in einem speziellen Mischvorgang, z.B. Granulatherstellung, erfolgen. Bei der Verwendung von Farbkonzentraten kann die Vermengung auch während des Verarbeitungsvorganges des Basiskunststoffe erfolgen.

### Beispiel 1:

Verwendet wurde eine PVC-Matrix, die mit 4 Gewichtsprozent der erfindungsgemäßen Partikel versehen war.

Als Partikelgröße wurde ein Partikelgemisch von Partikeln mit 0,01 mm und 0,4 mm Größe verwendet. Die Partikel waren geschnittene Typen mit anteilig je zwei Teilen 0,01 mm und zwei Teilen 0,4 mm.

Das im Extrusionsverfahren hergestellte Endprodukt zeigt eine Rauhtiefe von ca 40 µm.

### Beispiel 2:

Verwendet wurde wiederum eine PVC-Matrix unter Beimengung von 1 Gewichtsprozent Partikel. Es wurden jeweils 0,5 Teile der Partikelgröße 0,01 mm und 0,5 Teile der Partikelgröße 0,4 mm als Partikelgemisch eingesetzt. Die Partikel waren ebenfalls geschnittene Typen. Bei dem extrudierten Endprodukt wurde eine Rauhtiefe der Oberfläche von 15 µm gemessen.

### Beispiel 3:

Als Ausgangsmatrix wurde hier ABS verwendet, dem eine Menge von 3 Teilen der erfindungsgemäßen Partikel mit einer Partikelgröße von 0,02 mm beigemengt war. Die im Extrusionsverfahren erzielte Rauhtiefe des Endprodukts lag bei 35 µm.

### Beispiel 4:

Verwendet wurde eine Ausgangsmatrix aus PP. Diesem Kunststoffmaterial wurden 1,5 Teile einer Partikelgröße von 0,02 mm beigemengt. Gemessen wurde hier bei einem extrudierten Endprodukt eine Rauhtiefe von ca. 30 µm. Die Rauhtiefe der nach dem erfindungsgemäßen Verfahren extrudierten Endprodukte ist eine echte, fühlbare Rauhtiefe mit entsprechenden Oberflächenunebenheiten.

Diese Unebenheiten unterscheiden sich eindeutig von einer geprägten Oberfläche, die immer eine gewisse Ähnlichkeit in den Prägeeindrücken aufweist. Mit einer solchen Prägung lassen sich daher echt wirkende Imitationen von Steinoberflächen nicht erzielen.

## Patentansprüche

1. Verfahren zur Herstellung von Profilen, Leisten, Bändern, Platten und dergleichen aus thermoplastischem Kunststoff, wobei dem Kunststoff vor der Formgebung die Kunststoffeigenschaften beeinflussende Füllstoffe beigemengt werden, dadurch gekennzeichnet, daß als Füllstoffe geschnittene Folienpartikel eines im Schmelzestrom nicht schmelzbaren Kunststoffmaterials mit einem maximalen Anteil von 15 Gewichtsprozent und einer Partikelgröße von maximal 0.7 mm verwendet werden.

2. Verfahren nach Anspruch 1, dadurch gekennzeichnet, daß die Folienpartikel in regelmäßiger oder unregelmäßiger Größe verwendet werden.

3. Verfahren nach Ansprüchen 1 und 2, dadurch gekennzeichnet, daß die Folienpartikel metallbedampft sind.

4. Verfahren nach Ansprüchen 1 und 2, dadurch gekennzeichnet, daß die Folienpartikel mit einem hitzebeständigen Lack überzogen sind.

## Claims

1. A process for manufacturing profiles, beading, strips, sheets and similar products from a thermoplastic material to which fillers designed to influence the material properties have been added prior to the moulding stage, characterized in that the fillers used consist of cut particles of a plastic foil which does not melt in a melt stream, the particles constituting no more than 15 % of the total weight and measuring no more than 0.7 mm.

2. Process according to Claim 1, characterized in that foil particles of either regular or irregular size are used.

3. Process according to Claims 1 and 2, characterized in that the foil particles are metallized.

4. Process according to Claims 1 and 2, characterized in that the foil particles are covered in a heat-resistant coating.

## Revendications

1. Procédé pour la fabrication de profilés, de baguettes, de bandues, de plaques ou articles similaires en matières synthétiques thermoplastiques au cours duquel les propriétés de la matière sont modifiées avant sa mise en forme par l'incorporation d'adjuvants. Le procédé est caractérisé par l'utilisation en tant que charges, de fragments de particules d'une matière de synthèse non fusible, incorporés dans la matière de base fondue dans une proportion maximale de 15 % en masse et dont les particules ont une dimension maximale de 0,7 mm.

2. Selon la revendication 1, procédé caractérisé par l'utilisation de particules de dimensions régulières ou irrégulières.

3. Selon les revendications 1 et 2, procédé caractérisé par l'utilisation de particules métallisées sous vide.

4. Selon les revendications 1 et 2, procédé caractérisé par l'utilisation de particules revêtues d'une laque résistante à la chaleur.
